Europäisches Patentamt

European Patent Office

Office européen des brevets

(11) Veröffentlichungsnummer : **0 118 607
B1**

(12) **EUROPÄISCHE PATENTSCHRIFT**

(45) Veröffentlichungstag der Patentschrift :
01.02.89

(21) Anmeldenummer : 83112117.3

(22) Anmeldetag : 02.12.83

(51) Int. Cl.⁴ : **G 01 B   5/00**

(54) **Gekapselte Messeinrichtung.**

(30) Priorität : **12.02.83 DE 8304009 U**

(43) Veröffentlichungstag der Anmeldung :
**19.09.84 Patentblatt 84/38**

(45) Bekanntmachung des Hinweises auf die Patenterteilung : **01.02.89 Patentblatt 89/05**

(84) Benannte Vertragsstaaten :
**AT CH DE FR GB IT LI NL SE**

(56) Entgegenhaltungen :
**DE–A– 3 106 701
DE–B– 2 505 587
GB–A– 2 117 908
US–A– 3 816 002
FEINWERKTECHNIK & MESSTECHNIK, Band 88, Nr. 7, Oktober 1980, Seiten 333-338; A. SPIES "Präzisionsmassstäbe aus Stahl"**

(73) Patentinhaber : **Dr. Johannes Heidenhain GmbH
Nansenstrasse 17
D-8225 Traunreut (DE)**

(72) Erfinder : **Nelle, Günther, Dr.-Ing.
Eichenweg 12
D-8221 Bergen (DE)**

EP 0 118 607 B1

## Beschreibung

Die Erfindung betrifft eine gekapselte Meßeinrichtung gemäß dem Oberbegriff des Anspruchs 1.

Bei derartigen Meßeinrichtungen wird eine Relativbewegung — z. B. zweier Maschinenteile — gemessen. Die Maschinenteile können durch Maschinenbett und Maschinenschlitten gebildet werden. Zum Schutze der im allgemeinen sehr genauen Meßeinrichtung ist der Maßstab in einem Hohlprofil eingebettet und die Abtasteinheit ist ebenfalls innerhalb des Hohlprofiles angeordnet.

Bei Vorrichtungen dieser Genauigkeitsklasse ist die Auswahl der verschiedenen Materialien von großer Bedeutung, da Werkstoffe mit unterschiedlichen Wärmeausdehnungskoeffizienten kombiniert werden müssen. Aus den verschiedensten Gründen können nur in den seltensten Fällen Werkstoffe gleicher oder ähnlicher Wärmeausdehnungskoeffizienten verwendet werden. Am häufigsten kombiniert man Grauguß (Maschinenteile), Aluminium (Hohlprofile) und Stahl oder Glas für den Maßstab, wenn Werkstücke aus Stahl bearbeitet werden sollen.

Es ist bekannt, Maßstab und Grundkörper längsverschieblich, z. B. über eine hochelastische Zwischenschicht, zu verbinden ; Längenänderungen durch Verbiegung des Grundkörpers bleiben damit ohne Einfluß auf den Maßstab (DE-A-25 05 587 und DE-B-11 76 382). Des weiteren ist aus der US-A-3 816 002 eine Meßeinrichtung bekannt, deren Gehäuse an dem Schlitten einer Werkzeugmaschine befestigt ist. Der Maßstab wird innerhalb des Gehäuses an einem Ende fixiert, während das andere Ende des Maßstabes in einer Art Spannvorrichtung innerhalb des Gehäuses gelagert ist. Mit dieser Spannvorrichtung werden über eine Feder die temperaturabhängigen Längenänderungen des Gehäuses kompensiert. Der Maßstab bleibt durch diese Anordnung von den temperaturbedingten Längenänderungen des Gehäuses unbeeinflußt, es verändert sich jedoch seine Länge dabei entsprechend seinem eigenen thermischen Ausdehnungskoeffizienten. Das kann zu Meßfehlern führen. Dieses Verfahren ist daher nur bedingt anwendbar, wenn die durch Temperaturgang bedingten Fehler berücksichtigt werden.

Ändern sich bei derartigen Meßeinrichtungen beispielsweise die Werkstoffe der zu bearbeitenden Werkstücke, so müssen andere Fehlerkompensationsrechnungen durchgeführt werden. Alle Einflußgrößen der unterschiedlichen Ausdehnungskoeffizienten müssen in ihrer Wirkungsweise bei jeder neuen Werkstoffkombination jeweils auf neue berücksichtigt werden.

In der DE-A-28 30 980 ist eine Einrichtung zur Korrektur von Einstellfehlern in Meßsystemen infolge von thermischen Längenänderungen von Maschinenteilen beschrieben, bei der eine erste Meßstrecke in Form einer Bohrstange zur Aufnahme eines Werkzeugs in der Einbauebene des Meßsystems im Maschinenteil fest eingespannt ist. Eine thermisch bedingte Längenänderung dieser ersten Meßstrecke bzw. Bohrstange wirkt sich als eine entsprechende Lageänderung der Bearbeitungsebene des Werkzeugs relativ zur Einbauebene des Meßsystems aus. Mit der ersten Meßstrecke ist eine parallele zweite Meßstrecke in der Bearbeitungsebene des Werkzeugs starr verbunden. Die erste Meßstrecke weist einen größeren thermischen Ausdehnungskoeffizienten als die zweite Meßstrecke auf, so daß die unter Normalbedingungen gleichlangen Meßstrecken bei Temperaturänderungen eine Längendifferenz aufweisen. Diese Längendifferenz wird als Korrekturwert in das Meßsystem zur Erfassung der Lageänderung der Bearbeitungsebene des Werkzeugs relativ zur Einbauebene des Meßsystems eingegeben. Diese Korrektureinrichtung ist relativ aufwendig und erfordert die Befestigung der zweiten Meßstrecke an der ersten Meßstrecke in der Bearbeitungsebene des Werkzeugs, was nicht bei allen Bearbeitungsmaschinen möglich ist, so daß der Einsatzbereich dieser Korrekeinrichtung beschränkt ist.

Aus der DE-A-25 58 625 ist eine Werkzeugmaschine mit einem Maßstab zur Korrektur einer thermisch bedingten Spindelverlagerung bekannt, bei der der Maßstab aus einer Anordnung von mehreren, parallel zueinander liegenden Stäben besteht, von denen mindestens einer aus Stahl an der Maschine befestigt ist und an seinem freien Ende mit mindestens einem parallel verlaufenden Stab aus Aluminium verbunden ist, dessen freies Ende in der Nähe des Befestigungspunktes mit einem weiteren Stab aus Stahl verbunden ist, an dessem freien Ende ein Meßfühler angeordnet ist, der mit einem festen Punkt am Maschinengehäuse zusammenwirkt. Diese Korrektureinrichtung dient zur Herstellung einer konstanten Meßstrecke, deren Länge durch keine Wärmeeinwirkung beeinflußbar ist, parallel zu einem Maschinenteil, dessen Wärmeausdehnung kompensiert werden soll. Die mittels dieser konstanten Meßstrecke ermittelten Meßwerte für die Spindelverlagerung werden in die Antriebssteuerung des Maschinenteils mit der Spindel eingegeben.

In der DE-B-24 50 322 und in der DE-B-31 06 701 ist eine Einrichtung zur Kompensation thermischer Längenänderungen von Maschinenteilen offenbart, bei der ein Dehnstab mit einem gegenüber dem Maschinenteil größeren Wärmeausdehnungskoeffizienten mit einem Ende am Maschinenteil und mit dem anderen Ende an einem relativ zum Maschinenteil in Meßrichtung verschiebbaren Maßstab befestigt ist. Das Material und die Länge des Dehnstabes sind so bemessen, daß bei einer Verschiebung der Bearbeitungsebene des Werkzeugs gegenüber der Abtastebene des Meßsystems infolge thermischer Längenänderungen des Maschinenteils der Maßstab eine gleichgerichtete Verschiebung gleichen Betrages erfährt.

Der Erfindung liegt die Aufgabe zugrunde, bei einer gekapselten Meßeinrichtung der genannten Gattung mit einfachen Mitteln thermisch bedingte Störeinflüsse von Maschinenteilen zu eliminieren.

Diese Aufgabe wird erfindungsgemäß durch die Merkmale des Anspruchs 1 gelöst.

Die mit der Erfindung erzielten Vorteile bestehen insbesondere darin, daß die vorgeschlagene gekapselte Meßeinrichtung keiner zusätzlichen Elemente für die Kompensation thermischer Längenänderungen von Maschinenteilen bedarf, so daß die Meßeinrichtung infolge der Doppelfunktion des Gehäuses einmal als Dehnelement und zum anderen als Kapselungselement für den Maßstab und die Abtasteinheit im Aufbau und in den Abmessungen im wesentlichen unverändert bleibt und sich somit eine preisgünstige Meßeinrichtung zur Erzielung einer hohen Bearbeitungsgenauigkeit ergibt.

Vorteilhafte Weiterbildungen der Erfindung entnimmt man den abhängigen Ansprüchen.

Ein Ausführungsbeispiel der Erfindung wird anhand der Zeichnung näher erläutert.

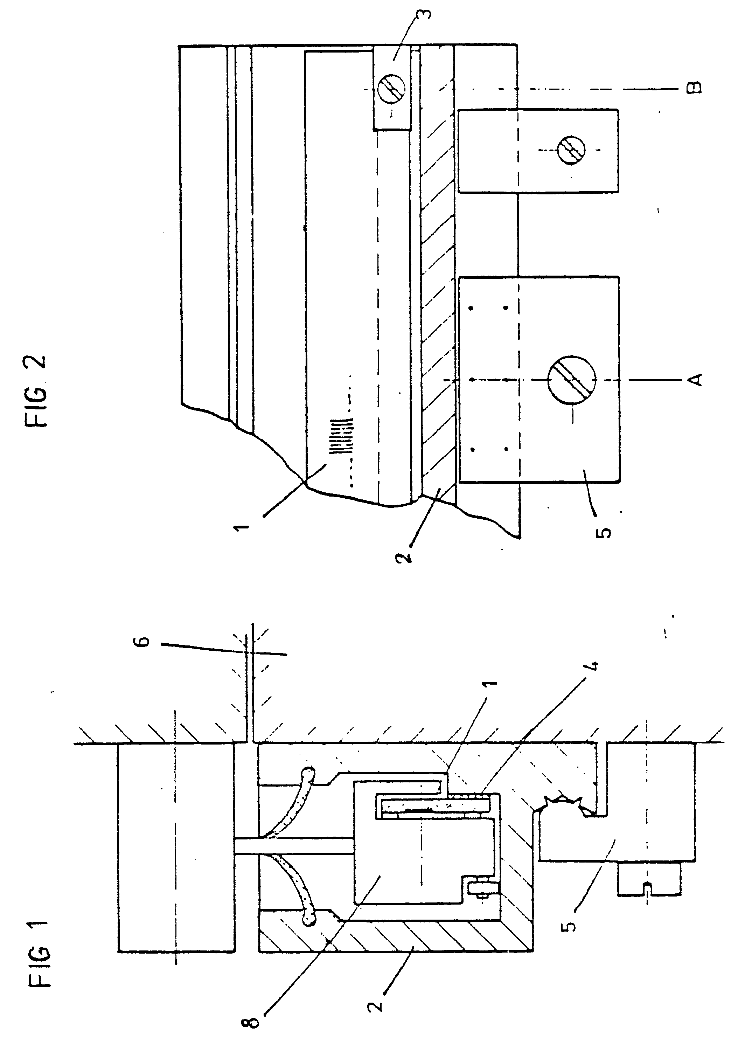

In Figur 1 ist in einem Querschnitt eine gekapselte Meßeinrichtung dargestellt. Ein Maßstab 1 aus Quarzglas, dessen thermischer Ausdehnungskoeffizient praktisch Null ist und das im Handel unter der Bezeichnung Herasil zu beziehen ist, ist mittels eines hochelastischen Klebers 4 im Inneren eines verwindungssteifen Gehäuses 2 befestigt.

Bei gleichmäßiger Temperaturänderung über die gesamte Maßstablänge hat diese Befestigungsart die gleichen Eigenschaften, als wäre der Maßstab 1 an einem Punkt in der Mitte fest mit dem Gehäuse 2 verbunden. Das Gehäuse 2 kann sich gleichmäßig von der Mitte aus in Meßrichtung ausdehnen, so daß es im Maßstab 1 nur zu vernachlässigbaren Spannungen kommt, die seine Länge nur unwesentlich verändern.

Die Befestigung des Gehäuses 2 an einem der Maschinen-Bauteile 6, deren Relativbewegung gemessen werden soll, erfolgt über Spannpratzen 5.

In Figur 2 ist ein Längsschnitt einer gekapselten Meßeinrichtung gezeigt. Hier ist der Quarzglas-Maßstab 1 an einem seiner Enden mit einer Klemmeinrichtung 3 fest auf das Gehäuse 2 aufgespannt. Von dieser Einspannstelle aus ist der Quarzglas-Maßstab 1 nur mit Hilfe einer hochelastischen Klebeschicht 4 am Gehäuse 2 abgestützt, so daß sich das Gehäuse 2 ungehindert bei Temperaturgang ausdehnen oder zusammenziehen kann. Das Gehäuse 2 wird wiederum durch Spannpratzen 5 am zugehörigen Maschinen-Bauteil 6 fest verankert. Durch eine gezielte Wahl der Lage der Befestigungspunkte A und B des Maßstabes 1 am Gehäuse 2 und des Gehäuses 2 am Maschinen-Bauteil 6 kann unter Berücksichtigung der thermischen Ausdehnungskoeffizienten des Gehäuses 2 und des Maschinen-Bauteils 6 eine Temperaturkompensation bei thermisch bedingten Längenänderungen der Maschinen-Bauteile erzielt werden, wobei das Gehäuse 2 gemäß der vorbeschriebenen Wirkungsweise zusätzlich die Funktion eines Dehnelements hat.

Der Maßstab 1 kann auch aus einer Nickel-Stahl-Legierung bestehen, die unter den Bezeichnungen Invar oder Vacodil 36 gehandelt wird. Der thermische Ausdehnungskoeffizient eines derartigen Maßstabes ist so gering, daß die temperaturbedingte Ausdehnung eines solchen Maßstabes praktisch vernachläßigt werden kann.

Die Auswahl der zu kombinierenden Materialien von Maßstab (Invar oder Quarzglas) und Gehäuse (Aluminium, faserverstärkter Kunststoff oder dergleichen) richtet sich nach den Anwendungsbedingungen und den vertretbaren Kosten.

**Patentansprüche**

1. Gekapselte Meßeinrichtung zur Messung der Relativlage zweier Objekte, bei der in einem mit dem ersten zu messenden Objekt verbundenen Gehäuse ein Maßstab angeordnet ist, der von einer mit dem zweiten zu messenden Objekt verbundenen Abtasteinheit abgetastet wird, das Gehäuse (2) an einem ersten Befestigungspunkt (A) mit dem ersten Objekt (6) verbunden und an einem zweiten Befestigungspunkt (B) am Maßstab (1) befestigt ist, und der Maßstab (1) im Gehäuse (2) in Meßrichtung geringfügig verschieblich angeordnet ist, dadurch gekennzeichnet, daß zur Kompensation thermischer Längenänderungen des ersten zu messenden Objekts (6) das Gehäuse (2) für den Maßstab (1) als Dehnelement ausgebildet ist.

2. Meßeinrichtung nach Anspruch 1, dadurch gekennzeichnet, daß das Gehäuse (2) mittels wenigstens einer Spannpratze (5) mit dem ersten Objekt (6) verbunden ist.

3. Meßeinrichtung nach Anspruch 1, dadurch gekennzeichnet, daß das gegenüber dem ersten Objekt (6) einen größeren Wärmeausdehnungskoeffizienten aufweisende, das Dehnelement verkörpernde Gehäuse (2) aus Aluminium besteht.

4. Meßeinrichtung nach Anspruch 1, dadurch gekennzeichnet, daß der Maßstab (1) über eine hochelastische Klebeschicht (4) im Gehäuse (2) geringfügig verschieblich angeordnet ist.

5. Meßeinrichtung nach Anspruch 1, dadurch gekennzeichnet, daß der thermische Ausdehnungskoeffizient des Maßstabs (1) nahe Null liegt.

6. Meßeinrichtung nach Anspruch 5, dadurch gekennzeichnet, daß der Maßstab (1) aus Nickelstahl besteht.

7. Meßeinrichtung nach Anspruch 5, dadurch gekennzeichnet, daß der Maßstab (1) aus Quarzglas besteht.

**Claims**

1. Encapsulated measuring device for measuring the relative position of two objects, in which a measuring scale is arranged in a housing connected to the first of the objects to be measured, which scale is sensed by a unit connected to the second of the objects to be measured, the housing (2) is connected to the first object (6) at a first fixing point (A) and to the measuring scale at a second fixing point (B), and the measuring scale (1) is arranged slightly displaceable in the measuring direction in the housing (2), characterized in that, for compensation of thermal length variations of the first object (6) to be measured, the housing (2) for the measuring scale (1) is formed as an expansion element.

2. Measuring device according to claim 1, characterized in that the housing (2) is connected to the first object (6) by means of at least one clamping claw (5).

3. Measuring device according to claim 1, characterized in that the housing (2) embodying the expansion element, having a greater coefficient of thermal expansion than the first object (6), consists of aluminium.

4. Measuring device according to claim 1, characterized in that the measuring scale (1) is arranged slightly displaceably in the housing (2) by means of a high elasticity adhesive layer (4).

5. Measuring device according to claim 1, characterized in that the thermal coefficient of expansion of the measuring scale (1) is practically zero.

6. Measuring device according to claim 5, characterized in that the measuring scale (1) consists of nickel steel.

7. Measuring device according to claim 5, characterized in that the measuring scale (1) consists of quartz glass.

## Revendications

1. Dispositif de mesure encapsulé, pour mesurer la position relative de deux objets, dans lequel une règle graduée est agencée dans une enceinte liée au premier objet à mesurer et est lue par une unité de lecture liée au deuxième objet à mesurer, l'enceinte (2) étant liée, en un premier point de fixation (A), au premier objet (6) et, en un deuxième point de fixation (B), à la règle graduée (1), laquelle est agencée dans l'enceinte (2) de manière à pouvoir être légèrement déplacée en translation dans la direction de mesure, caractérisé par le fait que, pour compenser les variations thermiques de la longueur du premier objet à mesurer (6), l'enceinte (2) pour la règle graduée (1) est réalisée en tant qu'élément d'allongement.

2. Dispositif de mesure selon revendication 1, caractérisé par le fait que l'enceinte (2) est liée au premier objet (6) au moyen d'au moins une griffe de serrage (5).

3. Dispositif de mesure selon revendication 1, caractérisé par le fait que l'enceinte constituant l'élément d'allongement, présentant, par rapport au premier objet (6), un coefficient de dilatation thermique plus grand, est en aluminium.

4. Dispositif de mesure selon revendication 1, caractérisé par le fait que la règle graduée (1) est agencée dans l'enceinte (2) par l'intermédiaire d'une couche d'adhésif (4) très élastique, de manière à pouvoir être légèrement déplacée en translation.

5. Dispositif de mesure selon revendication 1, caractérisé par le fait que le coefficient de dilatation thermique de la règle graduée (1) est proche de zéro.

6. Dispositif de mesure selon revendication 5, caractérisé par le fait que la règle graduée (1) est en acier au nickel.

7. Dispositif de mesure selon revendication 5, caractérisé par le fait que la règle graduée (1) est en verre quartzeux.

FIG 1

FIG 2

EP 0 118 607 B1